**Europäisches Patentamt**

**European Patent Office**

**Office européen des brevets**

(19)

(11) Veröffentlichungsnummer : **0 372 373 B1**

(12) **EUROPÄISCHE PATENTSCHRIFT**

(45) Veröffentlichungstag der Patentschrift :
**16.09.92 Patentblatt 92/38**

(51) Int. Cl.$^5$ : **F16L 35/00**

(21) Anmeldenummer : **89122046.9**

(22) Anmeldetag : **29.11.89**

(54) **Kupplung für technische Gase und Flüssigkeiten.**

(30) Priorität : **09.12.88 DE 3841485**

(43) Veröffentlichungstag der Anmeldung :
**13.06.90 Patentblatt 90/24**

(45) Bekanntmachung des Hinweises auf die
Patenterteilung :
**16.09.92 Patentblatt 92/38**

(84) Benannte Vertragsstaaten :
**AT BE CH ES FR GB GR IT LI LU NL SE**

(56) Entgegenhaltungen :
**GB-A- 278 805**
**US-A- 4 280 723**

(73) Patentinhaber : **MESSER GRIESHEIM GMBH**
**Hanauer Landstrasse 330**
**W-6000 Frankfurt/Main (DE)**

(72) Erfinder : **Wothe, Klaus**
**Am Skt. Swidbert 16**
**W-4000 Düsseldorf 31 (DE)**

EP 0 372 373 B1

**Beschreibung**

Die Erfindung betrifft eine Kupplung für technische Gase und Flüssigkeiten nach dem Oberbegriff des Anspruches 1.

Kupplungen, z. B. zum Verbinden von Schläuchen untereinander oder zum Anschluß eines Schlauches bzw. einer Gelenkrohrverbindung an einen Sehälter (Druckgasflaschenwagen auf der Straße bzw. Schiene, Straßentankwagen, Satteltankzug, Kaltvergaser, Standtank etc.), die für verschiedene Gase und Flüssigkeiten Anwendung finden können, stellen dann für den Menschen und die Umwelt eine Gefahr dar, wenn ein Kontakt verschiedener Gase/Flüssigkeiten aus sicherheitstechnischen Gründen sicher vermieden werden muß. Inbesondere dort, wo ein häufiger Wechsel der verschiedenen Gase und Flüssigkeiten vorgenommen wird, z. B. aus wirtschaftlichen Erwägungen bei den oben genannten Transporteinheiten, ist deshalb eine genügende Absicherung und/oder Kontrolle gegen ungewolltes Vermischen bzw. Vertauschen der Gase/Flüssigkeiten, z. B. beim Füllvorgang, erforderlich.

Hierzu ist es bekannt Kupplungen so auszubilden, daß die Befestigung zur lösbaren Verbindung der Kupplungsteile eine Gewindebefestigung ist, wobei einem bestimmten Gas eine bestimmte Gewindeart bzw. Gewindedimensionierung zugeordnet ist. Trotz dieser verschiedenen Gewinde konnten Schadensfälle nicht vermieden werden, die dadurch hervorgerufen wurden, daß ungleiche Gewinde miteinander verbunden wurden. Ein weiterer Nachteil ist bei diesen Kupplungen in der Vielzahl der zu lagernden Ersatzteile zu sehen.

Darüber hinaus sind aus der DE-C-10 95 069, der DE-A-36 07 088 sowie der US-A-18 42 897 bereits eine Vielzahl von Kupplungen bekannt, bei denen durch eine Kennungsring/Nutenanordnung Anschlußverwechselungen vermieden werden können.

Von Nachteil bei den bekannten Kupplungen ist, daß jede Kupplungsausbildung nur für eine bestimmte Gasart geeignet ist. So ist beispielsweise bei der DE-C-10 95 069 in einer Kupplungshülse eine Scheibe mit Nocken eingesetzt, die mit Rillen im Nippel zusammenwirken. Dabei werden zur Befestigung Kupplungshülse und Nippel ineinandergesteckt und mittels einer nicht näher dargestellten Überwurfmutter gegeneinandergepreßt. Auch die DE-A-36 07 088 sowie die US-A-42 80 723 offenbaren eine Kupplung, bei der die Unverwechselbarkeit von Kupplungsteilen durch eine in ein Kupplungsteil eingesetzte Scheibe erfolgt, die mit Nuten im anderen Kupplungsteil zusammenwirkt. Die Anpreßung der beiden Teile erfolgt über eine Überwurfmutter.

Bei diesen Konstruktionen erfolgt somit die Unverwechselbarkeit über an den Kupplungsteilen fest angebrachte Zentrierungen.

Bei der US-A-18 42 897 sind dagegen keine Zentrierungen an den Kupplungsteilen vorgesehen. Vielmehr wird hier eine Verwechselung dadurch vermieden, daß ein mit Nuten versehenes Gewinde durch einen mit Nocken versehenen Ring durchgesteckt wird, bis die Nocken in den Bereich einer Gewindehinterdrehung kommen. Danach kann das Gewinde in ein Innengewinde zur Befestigung eingreifen.

Zusammengefaßt offenbaren die Entgegenhaltungen somit Konstruktionen, bei denen die ineinandergreifenden, das Gas bzw. die Flüssigkeit führenden Kupplungsteile je nach Art des Gases bzw. der Flüssigkeit verschieden ausgebildet sind und somit für verschiedene Gase bzw. Flüssigkeiten jeweils speziell ausgebildete Kupplungsteile und entsprechend viele Ersatzteile zur Verfügung stehen müssen.

Ausgehend von diesem Stand der Technik ist es Aufgabe der vorliegenden Erfindung, eine nene Lösung verschaffen für eine Kupplung, deren einem bestimmten Gas bzw. einer bestimmten Flüssigkeit zugeordneten Kupplungsteile nicht mit den einem anderen Gas bzw. einer anderen Flüssigkeit zugeordneten Kupplungsteilen verbunden werden können und durch die die Lagerhaltung vereinfacht ist.

Diese Aufgabe wird bei einer gattungsgemäßen Einrichtung durch die kennzeichnenden Merkmale des Anspruches 1 gelöst. Vorteilhafte Weiterbildungen sind in den Ansprüchen 2 bis 7 angegeben.

Bei der erfindungsgemäßen Ausbildung wird durch den Kennungsring eine Produktspezifizierung erreicht.

Die Konstruktion bietet neben der Produktspezifizierung den weiteren Vorteil, daß Behälter zunächst mit produktneutralen Füllkupplungen ausgerüstet werden können, die erst bei Bedarf durch Aufsetzen des entsprechenden Kennungsringes produktspezifische Zuordnung erhalten. Auch wird nur eine besonders einfache Lagerhaltung weniger Ersatzteile erforderlich, da teuere Flanschteile nunmehr unabhängig von der Verwendung gleich ausgebildet werden können und nicht mehr gas- oder flüssigkeitsartspezifisch sind. Ein vergleichbarer Vorteil ergibt sich beim Umsetzen gebrauchter Behälter, wo nur durch Austausch des Kennungsringes eine neue Produktzuordnung der Behälterkupplung vorteilhaft möglich ist.

Darüber hinaus dienen die in der Überwurfmutter eingebrachten Längsnuten einer Doppelfunktion, nämlich der Aufnahme der Nocken vom Kennungsring und eines möglichen durch Tieftemperaturen herrührenden Reifansatzes im Gewinde der Überwurfmutter.

Ein Ausführungsbeispiel der Erfindung ist in der Zeichnung dargestellt und wird im folgenden näher beschrieben.

Es zigen:

2

Fig. 1 Kupplung im Längsschnitt

Fig. 2a - 2e verschiedene Kennungsringe

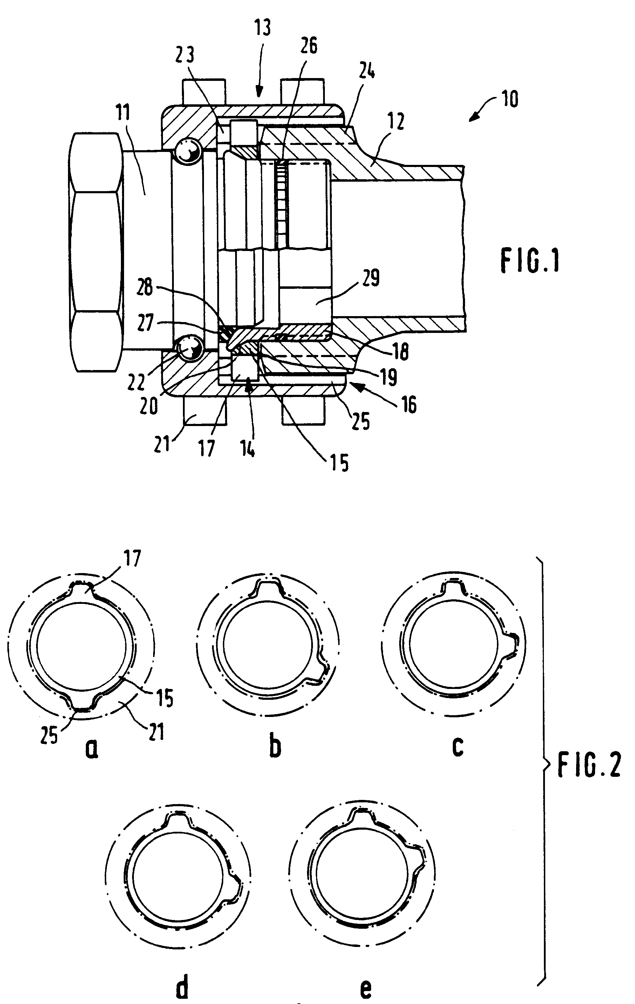

In Fig. 1 weist die Kupplung 10 ein Schlauchkupplungsteil 11, ein Behälterkupplungsteil 12 sowie ein in ihrer Gesamtheit mit 13 bezeichnete Befestigung zur lösbaren Verbindung der beiden Kupplungsteile 11 und 12 auf. Erfindungsgemäß weist die Kupplung 10 eine Schutzvorrichtung 14 gegen Anschlußverwechslungen auf. Die Schutzvorrichtung 14 besteht aus einem am Behälterkupplungsteil 12 drehbar gelagerten Kennungsring 15 und einer in der Befestigung 13 vorgesehenen Aufnahme 16 für Nocken 17 des Kennungsrings 15. Der Kennungsring 15 ist bevorzugt auf einem im Behälterkupplungsteil 12 eingeschraubten bzw. im Kupplungsteil 12 mechanisch fest angeordneten Dichtungseinsatz 18 drehbar gelagert und dabei zwischen dem Bund 19 des Behälterkupplungsteils 12 und einer sich nach außen vorzugsweise kegelförmig erweiternden Fläche 20 des Dichtungseinsatzes 18 gegen axiales Verschieben gesichert. Die Befestigung 13 ist als Überwurfmutterverbindung so ausgebildet, daß die Überwurfmutter 21 über eine Vielzahl von radial angeordneten Kugeln 22 drehbar am Schlauchkupplungsteil 11 befestigt ist, wodurch Leichtgängigkeit bei jeder vorhandenen Betriebstemperatur gewährleistet wird. Die Mutter 21 weist ein Trapezinnengewinde 23, das mit einem am Behälterkupplungsteil 12 vorgesehenen Trapezaußengewinde 24 in Wirkverbindung steht, auf. In der Überwurfmutter 21 sind ferner Längsnuten 25 zur Aufnahme der Nocken 17 vorgesehen. Durch unterschiedliche Gewindegrößen zwischen Innengewinde an der Überwurfmutter 21 und Außengewinde am Behälterkupplungsteil 12 kann das Gewindeprofil für einen problemlosen Kupplungsvorgang ausreichend groß gewählt werden, was insbesondere bei kryogener Anwendung von Bedeutung ist. Bevorzugt ist dabei der Durchmesser des Trapezaußengewindes 25 um mindestens einen Millimeter kleiner als der Durchmesser des Trapezinnengewindes 23. Die kryogene Anwendung erfordert auch die Säuberung des Gewindes von Reifansatz bzw. Eis- und Schmutzpartikeln während des Kupplungsvorganges, was durch die Anordnung der Längsnuten 25 in der Überwurfmutter 21 mit erreicht wird.

Zur Abdichtung der Kupplung 10 sind einerseits zwischen dem Dichtungseinsatz 18 und dem Behälterkupplungsteil 12 eine Gewindedichtung 26 in Rechteckringausführung und andererseits am Schlauchkupplungsteil 11 ein Dichtring 27, der gegen den konisch ausgebildeten Dichtsitz 28 des Dichtungseinsatzes 18 beim Anziehen der Überwurfmutter 21 anpreßbar ist, vorgesehen, wobei ein Wegdrücken oder Fließen des Dichtungsmaterials durch die latente Ausbildung einer Dichtungskammer während des Kupplungszustandes sicher vermieden wird.

Dabei ist eine Verbindung zwischen den beiden Kupplungsteilen 11 und 12 nur möglich, wenn die Stellung der Nocken 17 zur Markierung einer bestimmten Gas- oder Flüssigkeitsart mit der Position/Anordnung der Längsnuten 25 in der Überwurfmutter 21 übereinstimmt und somit zum Anziehen der Mutter 21 die Längsnuten 25 zunächst über die Nocken 17 geschoben werden und dann bei der Schraubfunktion die Nocken 17 in den Längsnuten 25 gleiten, wobei während der Schraubfunktion der Kennungsring 15 mit den Nocken 17 sich mitdreht.

Beim Ausführungsbeispiel gemäß Fig.1 sind die Nocken 17/Längsnuten 25 entsprechend Fig.2a ausgebildet. Vorteilhaft können durch einfaches Lösen des Dichtungseinsatzes 18, z.B. mit einem am Innensechskant 29 angreifenden Sechskantschlüssel, unterschiedliche Kennungsringe, z.B. Kennungsringe nach den Fig.2b - e am Behälterkupplungsteil 12 befestigt werden. Dabei sind beispielsweise die Kennungsringe folgenden Gasarten zugeordnet:

– Fig. 2a Stickstoff
– Fig. 2b Sauerstoff
– Fig. 2c Argon
– Fig. 2d Distickstoffoxid
– Fig. 2e Schweißschutzgas Argomix[R]

Selbstverständlich muß dann auch die Überwurfmutter 21 entsprechend angeordnete Längsnuten 25 aufweisen, die neben der Führung der Nocken 14 des Kennungsringes 15 der Säuberung des Trapezgewindes 24 von Eis- und Schmutzpartikeln dienen.

Durch Austausch der Überwurfmutter 21 am Schlauchkupplungsteil 11, was durch die Kugelbefestigung 22 einfach durchführbar ist, kann die Produktzuordnung am Füllschlauch und durch Austausch des Kennungsringes 15 die Produktzuordnung am Behälterkupplungsteil 12 einfach durchgeführt werden. Dies ermöglicht die mit einem einfachen Trapezbefestigungsgewinde ausgestattete und damit ersatzteilgünstig ausgebildete Standardkupplung verschiedenen Gasen bzw. Flüssigkeiten fest zuzuordnen (codieren) und somit Verwechslungen beim Anschluß, Füllen, Betanken etc. zu vermeiden.

EP 0 372 373 B1

**Patentansprüche**

1. Kupplung für technische Gase und Flüssigkeiten, insbesondere zum Anschluß eines Schlauches bzw. einer Gelenkrohrverbindung an einen Sehälter, mit einem Schlauchkupplungsteil sowie einem Behälterkupplungsteil, das einen drehbaren Kennungsring mit Nocken zur Markierung verschiedener Gase bzw. Flüssigkeiten aufweist, und einer am Schlauchkupplungsteil drehbar befestigten Überwurfmutter,
dadurch gekennzeichnet,
daß der Kennungsring (15) mit seiner radialen Innenseite drehbar und answechselbar am Behälterkupplungsteil (12) befestigt ist und in der Überwurfmutter (21) Längsnuten (25) zur Aufnahme der radial nach außen weisenden Nocken (17) des Kennungsrings vorgesehen sind, so daß beim Befestigen bzw. Lösen der Überwurfmutter (21) die Nocken (17) in den Längsnuten (25) gleiten und der Kennungsring (15) mit den Nocken sich mitdreht.

2. Kupplung nach Anspruch 1,
dadurch gekennzeichnet,
daß am Behälterkupplungsteil (12) Kennungsringe (17) mit unterschiedlichen Nockenstellungen befestigbar sind.

3. Kupplung nach Anspruch 1 oder 2,
dadurch gekennzeichnet,
daß der Kennungsring (17) auf einem im Behälterkupplungsteil (12) eingeschraubten bzw. im Kupplungsteil (12) mechanisch fest angeordneten Dichtungseinsatz (18) drehbar gelagert ist.

4. Kupplung nach einem der Ansprüche 1 bis 3,
dadurch gekennzeichnet,
daß die Überwurfmutter ein Trapezinnengewinde (23) aufweist, das mit einem am Behälterkupplungsteil (12) vorgesehenen Trapezaußengewinde (25) verbindbar ist.

5. Kupplung nach einem der Ansprüche 1 bis 4,
dadurch gekennzeichnet,
daß zur Abdichtung der Kupplung einerseits zwischen Dichtungseinsatz (18) und Behälterkupplungsteil (12) eine Weichdichtung (26) vorzugsweise als Gewindichtung und andererseits am Schlauchkupplungsteil (11) ein Dichtungsring (27), der gegen den konisch ausgebildeten Dichtsitz (28) des Dichtungseinsatzes (18) anpreßbar ist, vorgesehen sind.

6. Kupplung nach einem der Ansprüche 1 bis 5,
dadurch gekennzeichnet,
daß der Durchmesser des Trapezaußengewindes (25) am Behälterkupplungsteil (12) um mindestens einen Millimeter kleiner ist als der Durchmesser des Trapezinnengewindes (23) an der Überwurfmutter (21).

7. Kupplung nach einem der Ansprüche 1 bis 6,
dadurch gekennzeichnet,
daß die in der Überwurfmutter eingebrachten Längsnuten einer Doppelfunktion, nämlich der Aufnahme der Nocken vom Kennungsring und eines möglichen durch Tieftemperaturen herrührenden Reifansatzes im Gewinde der Überwurfmutter genügen.

**Claims**

1. Coupling for industrial gases and liquids, in particular for connecting a hose or a swivel pipe connection to a container, having a hose coupling part as well as a container coupling part which has a rotatable identification ring with- lugs for designating various gases or liquids, and a cap nut rotatably fastened to the hose coupling part, characterised in that the identification ring (15) is rotatably and interchangeably fastened with its radial inside to the container coupling part (12), and longitudinal grooves (25) for receiving the lugs (17), pointing radially outwards, of the identification ring are provided in the cap nut (21), so that, when the cap nut (21) is being fastened or released, the lugs (17) slide in the longitudinal grooves (25) and the identification ring (15) having the lugs rotates therewith.

4

2. Coupling according to Claim 1, characterised in that identification rings (15) having different lug positions can be fastened to the container coupling part (12).

3. Coupling according to Claim 1 or 2, characterised in that the identification ring (15) is rotatably mounted on a sealing insert (18) which is screwed into position in the container coupling part (12) or is firmly arranged mechanically in the coupling part (12).

4. Coupling according to one of Claims 1 to 3, characterised in that the cap nut has a trapezoidal internal thread (23) which can be connected to a trapezoidal external thread (24) provided on the container coupling part (12).

5. Coupling according to one of Claims 1 to 4, characterised in that, in order to seal the coupling a soft seal (26) is provided, preferably as a thread seal, between sealing insert (18) and container coupling part (12), on the one hand, and a sealing ring (27) which can be pressed against the conically designed sealing seat (28) of the sealing insert (18) is provided at the hose coupling part (11), on the other hand.

6. Coupling according to one of Claims 1 to 5, characterised in that the diameter of the trapezoidal external thread (24) on the container coupling part (12) is smaller than the diameter of the trapezoidal internal thread (23) on the cap nut (21) by at least one millimetre.

7. Coupling according to one of Claims 1 to 6, characterised in that the longitudinal grooves made in the cap nut fulfil a double function, namely that of receiving the lugs of the identification ring and a possible hoarfrost deposit, due to low temperatures, in the thread of the cap nut.

## Revendications

1°) Accouplement pour des gaz et liquides techniques notamment pour raccorder un tuyau ou un ensemble de tubes articulés sur un réservoir à une partie d'accouplement de tuyau ainsi qu'à une partie d'accouplement de réservoir qui comporte une bague caractéristique, rotative, munie d'ergots pour repérer différents gaz et liquides, et un écrou chapeau fixé à rotation sur la partie d'accouplement de tuyau, accouplement caractérisé en ce que la bague caractéristique (15) est fixée à rotation avec son côté intérieur radial et de manière échangeable sur la partie d'accouplement (12) du réservoir et l'écrou chapeau (21) comporte des rainures longitudinales (25) pour recevoir les ergots (17) de la bague caractéristique, de façon qu'au serrage ou au desserrage de l'écrou chapeau (21), les ergots (17) glissent dans les rainures longitudinales (25) et que la bague caractéristique (15) soit entraînée par les ergots.

2°) Accouplement selon la revendication 1, caractérisé en ce que des bagues caractéristiques (17) ayant des ergots positionnés différemment peuvent être fixées sur la partie d'accouplement de réservoir (12).

3°) Accouplement selon la revendication 1 ou 2, caractérisé en ce que la bague caractéristique (17) est montée à rotation sur une garniture d'étanchéité (18) vissée dans la partie d'accouplement de réservoir (12) ou reliée mécaniquement à la partie d'accouplement (12).

4°) Accouplement selon l'une des revendications 1 à 3, caractérisé en ce que l'écrou chapeau présente un filetage trapézoïdal (23) qui peut être relié à un filetage trapézoïdal extérieur (25) prévu sur la partie d'accouplement de réservoir (12).

5°) Accouplement selon l'une des revendications 1 à 4, caractérisé en ce que pour assurer l'étanchéité de l'accouplement, d'une part, entre la garniture d'étanchéité (18) et la partie d'accouplement de réservoir (12), on a un joint souple (26), de préférence comme joint à filetage, et, d'autre part, sur la partie d'accouplement de tuyau (11), on a un joint d'étanchéité (27) qui peut être pressé contre le joint d'étanchéité (28) de forme conique de la garniture d'étanchéité (18).

6°) Accouplement selon l'une des revendications 1 à 5, caractérisé en ce que le diamètre du filetage trapézoïdal extérieur (25) de la partie d'accouplement de réservoir (12) est plus petit au moins d'un millimètre que le diamètre du filetage trapézoïdal intérieur (23) de l'écrou chapeau (21).

7°) Accouplement selon l'une des revendications 1 à 6, caractérisé en ce que les rainures longitudinales réalisées dans l'écrou chapeau ont une double fonction, à savoir celle de recevoir les ergots de la bague caractéristique et, d'autre part, d'absorber un éventuel dépôt de givre dans le filetage de l'écrou chapeau et qui serait provoqué par des températures extrêmement basses.

FIG.1

FIG.2